## Europäisches Patentamt

## European Patent Office

## Office européen des brevets

(19)

(11) Veröffentlichungsnummer: **0 087 729**

**A1**

(12)

# EUROPÄISCHE PATENTANMELDUNG

(21) Anmeldenummer: 83101695.1

(22) Anmeldetag: 22.02.83

(51) Int. Cl.³: **B 41 F 13/18**
F 16 C 13/00

(30) Priorität: 03.03.82 IT 6723882

(43) Veröffentlichungstag der Anmeldung:
07.09.83 Patentblatt 83/36

(84) Benannte Vertragsstaaten:
CH DE FR GB LI SE

(71) Anmelder: **Componenti Grafici S.r.l.**
**Corso Re Umberto 8**
**I-10128 Torino(IT)**

(72) Erfinder: **Molinatto, Bruno**
**Via Ivrea 128**
**Montalto Dora (Torino)(IT)**

(74) Vertreter: **Mayer, Hans Benno**
**Via dell'Orso 7/A**
**I-20121 Milano(IT)**

(54) **Druckzylinder mit in ihrer Form veränderbaren Achse.**

(57) Druckzylinder (1), mit in ihrer Form veraenderbaren Achse, bei welchem ein aeusserer Mantel (2) drehbar von einer in seinem Inneren angeordneten Welle (3), die im wesentlichen koaxial zum Mantel (2) angeordnet ist, an den Enden ueber Lager (10) und im mitteleren Bereich ueber Hebel (21) getragen wird, wobei die Hebel gelenkig mit dem mittleren Teil der genannten Welle (3) verbunden sind und an der inneren Flaeche (7) des Mantels (2), unter Zwischenschaltung von Lagern (22) und Betaetigungsmitteln (15), die zwischen der inneren Welle (3) und jedem Hebel (21) angeordnet sind, anliegen.

EP 0 087 729 A1

**0087729**

Akte Nr. 03-140

Firma Componenti Grafici S.r.l., 10128 - Turin, Corso RE Umberto 8.

"Druckzylinder mit in ihrer Form veraenderbaren Achse"

Die vorstehende Erfindung betrifft einen Druckzylinder mit in seiner Form veraenderbaren Achse.

Die Erfindung bezieht sich hauptsaechlich auf einen Druckzylinder fuer eine Tiefdruckmaschine, der in Beruehrung mit einer beweglichen Stuetzflaeche, ueberlicherweise einer zylindrischen Flaeche Verwendung findet, um dieser Flaeche einen bestimmten Druck zu uebertragen, der im wesentlichen gleichfoermig laengs einer Beruehrungslinie verteilt ist.

Die vorstehende Erfindung findet in vorteilhafter Weise bei relativ langen Druckzylindern Anwendung, fuer welche sowohl der Einfluss des Eigengewichtes, als auch der Einfluss der genannten Beruehrungsflaechen, ueblicherweise zu einem unvollstaendigen Kontakt zwischen diesen und den entsprechenden Druckzylindern fuehrt. Somit ist der Auflagedruck nicht gleichmaessig entlang der genannten Beruehrungslinie verteilt, sondern aendert sich von Punkt zu Punkt dieser Beruehrungslinie, ueblicherweise nach komplexen Gestzmaessigkeiten, die ein Minimum in der Naehe der Mitte des Druckzylinders erreichen. Ist es erforderlich, dieses Minimum ueber einen vorbestimmten Wert zu bringen, so wird es notwendig, auf den Zylinder einen Druck auszuueben, der einen mittleren Druckwert entlang der Mantellinie des Zylinders entspricht, der weitaus hoeher als der Wert des angefuehrten Minimums ist.

Aufgabe der vorstehenden Erfindung ist es, einen Druckzylinder zu schaffen, dessen Beruehrungslinie des Mantels eine Verformung verliehen werden kann, die identisch zur Verformung der entsprechenden Auflageflaeche ist und unabhaengig von jener Belastungen ist, die zwischen der genannten Oberflaeche und dem Zylinder entlang deren Beruehrungslinie auftreten.

Erfindungsgemaess wird diese Aufgabe dadurch geloest, dass ein Druckzylinder mit einer in ihrer Form veraenderbaren Achse vorgesehen ist, dass der Zylinder aus einem zylinderfoermigen aeusseren Mantel besteht, dessen entgegengesetzte Enden drehbar auf einer zentralen Welle gelagert sind dass Betaetigungseinrichtungen im Inneren des genannten Mantels vorgesehen sind, um der Achse des Mantels eine bestimmte Durchbiegung zu erteilen, wobei die genannten Betaetigungsmittel von einem Mittelstueck der zentralen Welle aufgenommen werden und Hebel aufweisen, die gelenkig mit dem Mittelstueck verbunden sind und um ihren Anlenkpunkt, unter dem Einfluss von Schubeinrichtungen, die auf genanntem Mittelstueck montiert sind, verschwenkbar sind, dass die schwenkbaren Hebel mit der

-3-    0087729

inneren Mantelflaeche ueber Rollen, die von den Hebeln aufgenommen werden, wirkverbunden sind.

Weitere Merkmale und Vorteile der vorstehenden Erfindung koennen der folgenden Beschreibung, unter Bezugnahme auf die beigefuegte Zeichnung entnommen werden.

In der beigefuegten Zeichnung ist schematisch im Laengsschnitt ein Ausfuehrungsbeispiel des erfindungsgemaessen Druckzylinders dargestellt.

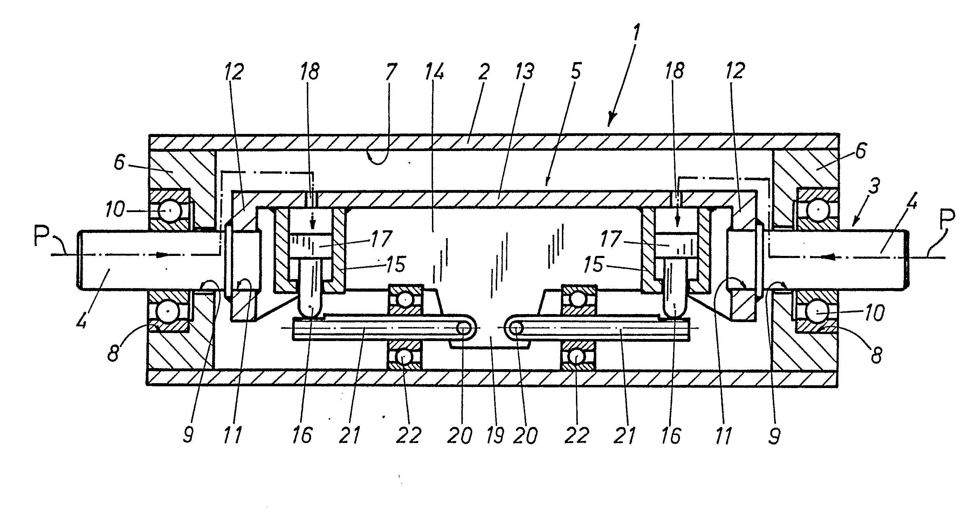

In der Zeichnung ist ein Druckzylinder dargestellt, der in seiner Gesamtheit mit 1 bezeichnet ist. Der Druckzylinder 1 weist einen aeussseren zylinderischen Mantel 2 auf, der in Laengsrichtung von einer inneren Welle durchdrungen wird. Diese Welle weist zwei Endstuecke oder Achszapfen 4 auf, die von den entgegengesetzten Enden eines gehaeuseartigen Zwischenstueckes 5, das im Inneren des Mantels angeordnet ist, abstehen.

Jedes der Enden des Mantels 2 ist mit einem Ringkoerper 6 verbunden, dessen aeussere Oberflaeche kraftschluessig mit der inneren zylindrischen Flaeche 7 des Mantels verbunden ist. Jeder Ringkoerper 6 weist auf jeder nach aussen gerichteten Flaeche, eine Ausbohrung 8 auf, deren Grund von einer Axialbohrung 9 durchdrungen wird. Diese Bohrung wird drehbar und mit Radialspiel vom entsprechenden Zapfen 4 durchdrungen, dessen aeussere Flaeche mit dem Innenring eines Radialkugellagers 10 verbunden ist, das kraftschluessig im Inneren der Ausbohrung 8 angeordnet ist, um den Mantel 2 drehbar gegenueber der Welle 3

aufzunehmen.

Ein Ende eines jeden Zapfens 4 ragt aus dem Mantel 2 und bildet ein Auflager fuer den Zylinder 1, waehrend das andere Ende sich im Inneren der Huelle 2 fortsetzt und mit einer Bohrung 11 in Wirkverbindung steht, die in eine Wand 12 des gehaeusefoermigen Mittelstueckes eingearbeitet ist, mit der jeder Endzapfen 4 fest verbunden ist.

Neben den Endwaenden 12 weist das gehaeusefoermige Bauteil 5 eine Grundwand 13 auf, die senkrecht zu den Waenden 12 und parallel zur Achse des Mantels 2 ausgerichet ist. Die Wand 13 bildet zusammen mit den Waenden 12 ein wannenfoermiges Gebilde, das in seinem Inneren eine Laengsrippe 14 aufnimmt, die sich von einer Wand 12 zur anderen Wand erstreckt und die mit den Waenden 12 und 13, zu denen sie senkrecht steht, fest verbunden ist.

Im Inneren des wannenfoermigen Gehaeuses sind zwei Kolbenzylindereinheiten 15, die durch ein Druckmittel beaufschlagbar sind, angeordnet. Der Boden dieser Kolbenzylindereinheiten wird von der Wand 13 gebildet, und der deckelfoermige Wandabschluss jeder Kolbenzylindereinheit wird von einer Kolbenstange 16 durchdrungen, die Bestandteil eines Kolbens 17 bildet, der verschiebbar im Inneren des zugeordneten Zylinders angeordnet ist. Der Kolben 17 ist verschiebbar im Inneren des entsprechenden Zylinders 15 angeordnet und in Laengsrichtung des Zylinders unter dem Einfluss einer

- 5 -

0087729

Druckfluessigkeit P, die dem Zylinder ueber eine Wand 13 eingebrachte Bohrung 18 eingespeist wird, bewegbar.

Die Zylinder 15 sind im wesentlichen radial gegenueber der Huelle 2 angenordnet und in der Naehe der nach innen gerichteten Enden der entsprechenden Endzapfen 4 vorgesehen. Zwischen den Kolbenzylindereinheiten 15 weist die Laengsrippe 14 einen Vorsprung 19 auf, der sich ebenfalls in radialer Richtung zum Mantel 2 hin, von einer freien Seite der Laengsrippe 14, die der Wand 13 entgegengesetzt ist, erstreckt.

Mit dem Vorsprung 19 sind zwei Zapfen 20, mit senkrecht zur Welle 3 angeordneten Achsen, wirkverbunden. Die Zapfen 20 sind symmetrisch und spiegelbildlich zur Mitte der Welle angeordnet. Auf jedem Zapfen 20 ist gelenkig das Ende eines Hebels 21 gelagert, der im wesentlichen achsparallel zur Welle 3 angeordnet ist, dessen anderes Ende am freien Ende der entsprechenden Kolbenstange 16 anliegt.

Jeder Hebel 21 weist im wesentlichen runde Querschnittsform auf und ist kraftschluessig mit der Innenflaeche des inneren Ringes eines Radialkugellagers 22 verbunden, dessen aeusserer Ring an die Flaeche 7 des Mantels 2 durch die Kolbenstange 16 und den entsprechenden Hebel 21 gedrueckt wird.

Beim Einsatz des Zylinders, wenn der Achse des Zylinders 1 eine bestimmte Durchbiegung verliehen werden soll, wird in das Innere der Zylinder 15 Druckfluessigkeit zugefuehrt, wodurch die Kolbenstangen 16 nach aussen verschoben werden.

Die Druckfluessigkeit kann den Zylinder 15, entweder direkt ueber Druckleitungen (P), die sich durch die Zapfen 4 bis zu den Bohrungen 18 erstrecken, zugefuehrt werden oder aber, die gesamte durch den Mantel 2 und die Ringkoerper 6 definierte Kammer, kann unter Druck gesetzt werden.

Einer Druckzunahme im Inneren der Zylinder 15 entspricht eine nach aussen gerichtete Verschiebung der Kolbenstangen 16, sowie eine nach aussen gerichtete Verschwenkung der Hebel 21. Dieser Bewegung setzt sich elastisch der Mantel 2 und starr die Welle 3 entgegen. Ein Verschwenken der Kugellager 22 nach aussen wird durch eine nach aussen gerichtete Durchbiegung des Mantels 2 in dessen Mitte gegenueber der Welle 3 ermoeglicht.

Aus der bisherigen Beschreibung geht hervor, wie es durch Aufbringen eines Druckes im Inneren der Zylinder 15 moeglich wird, der Achse des Mantels 2 eine gewuenschte Durchbiegung nach aussen zu verleihen. Die Durchbiegung ist proportional dem aufgebrachten Druck und wird aufgrund der elastischen Rueckstellbewegung der Huelse 2 und der Welle 3 zunichte gemacht, sobald die Druckwirkung ausbleibt.

Akte Nr. 03-140

Patentansprueche

1. Druckzylinder, mit in ihrer Form veraenderbaren Achse, wobei der Zylinder einen aeusseren zylinderfoermigen Mantel (2) aufweist, dessen entgegengesetzte Enden drehbar auf einer mittigen Welle (3) angeordnet sind, und Betaetigungsmitteln im Inneren des Mantels aufweist, die zur Uebertragung einer Durchbiegung der Achse des Mantels vorgesehen sind, dadurch gekennzeichnet, dass die Betaetigungsmittel (15, 16, 21) von einem Mittelstueck (5) der zentralen Welle (3) getragen werden und Hebeleinrichtungen (21) aufweisen, die auf dem genannten Mittelstueck (5) gelenkig angeordnet und um ihren Anlenkpunkt (20) unter dem Einfluss von Schubeinrichtungen (16), die auf dem Mittelstueck (5) angeordnet sind, verschgwenkbar sind, dass die schwenkbaren Hebel (21) mit der inneren Mantelflaeche (7) des Mantels (2) ueber Rollen (22), die von den schwenkbaren Hebeln (21) getragen werden, wirkverbunden sind.

2. Zylinder, nach Patentanspruch 1, dadurch gekennzeichnet, dass die Hebelgestaenge zwei Hebel (21) aufweisen, die sich von den Anlenkpunkten (20) aus in entgegengesetzte Richtungen erstrecken und, dass die zwei Hebel (21) im wesentlichen parallel zur Achse der Welle (3) verlaufen.

3. Zylinder, nach Patentanspruch 2, dadurch gekennzeichnet, dass die Rollen fuer jede der genannten Hebel (21), ein Radialkugellager (22) aufweisen, deren innerer Ring mit dem zugeordneten Hebel (21) in Wirkverbindung steht, und dessen aeusserer Ring an der inneren, zylindrischen Flaeche (7) des Mantels (2) abrollt.

4. Zylinder, nach Patentanspruch 2 oder 3, dadurch gekennzeichnet, dass die genannten Schubmittel fuer jeden Hebel (21) eine Kolbenzylindereinheit (15) aufweisen, die von einem Druckmittel beaufschlagbar ist, dass jeder Kolbenzylindereinheit radial gegenueber dem Mantel (2) angeordnet ist und eine Kolbenstange (16) aufweist, die im wesentlichen quer zum zugehoerigen Hebelgestaenge (21) ausgerichtet ist.

0087729

Europäisches
Patentamt

**EUROPÄISCHER RECHERCHENBERICHT**

**0087729**
Nummer der Anmeldung

EP 83 10 1695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | CH-A- 383 087 (BENNINGER) <br> * Insgesamt * <br><br> --- | 1-4 | B 41 F 13/18 <br> F 16 C 13/00 |
| Y | GB-A-2 061 459 (MAN-ROLAND) <br> * Insgesamt * <br><br> --- | 1-4 | |
| A | GB-A- 893 426 (VEB ERSTE MASCHINENFABRIK KARL-MARX-STADT) <br> * Insgesamt * <br><br> --- | 1,3,4 | |
| A | US-A-3 119 324 (JUSTUS) <br> * Spalte 3, Zeilen 63-70; Figur 3 * <br><br> ----- | 1,4 | |

**RECHERCHIERTE SACHGEBIETE (Int. Cl. ³)**

B 41 F
F 16 C

Der vorliegende Recherchenbericht wurde für alle Patentansprüche erstellt.

| Recherchenort <br> DEN HAAG | Abschlußdatum der Recherche <br> 01-06-1983 | Prüfer <br> RECHLER W. |
|---|---|---|